**Europäisches Patentamt**

**European Patent Office**

**Office européen des brevets**

(19)

(11) **EP 0 737 506 A1**

(12) **EUROPÄISCHE PATENTANMELDUNG**

(43) Veröffentlichungstag:
16.10.1996 Patentblatt 1996/42

(51) Int. Cl.$^6$: **B01D 71/52**, B01D 67/00, C08J 9/26

(21) Anmeldenummer: 96101863.7

(22) Anmeldetag: 09.02.1996

(84) Benannte Vertragsstaaten:
AT CH FR GB LI NL

(30) Priorität: 28.03.1995 DE 19511361

(71) Anmelder: REHAU AG + Co
95111 Rehau (DE)

(72) Erfinder:
• Gröbe, Anneliese, Dr.
D-95111 Rehau (DE)

• Weinberg, Ekkehard, Dr.
D-95111 Rehau (DE)
• Müller, Margit
D-95111 Rehau (DE)
• Poersch, Franz, Dr.
D-95111 Rehau (DE)
• Hopperdietzel, Sigfried, Dr.
D-95111 Rehau (DE)

(54) **Verfahren zur Herstellung von Polymermembranen auf der Basis von Polyethereth**

(57)    Die Erfindung betrifft ein Verfahren zur Herstellung von Polymer-Membranen auf Basis Polyetheretherketon (PEEK), dadurch gekennzeichnet, daß 5-20 Gew% PEEK und 0,01-15 Gew% Polyethylenterephthalat einer Mischung von 2-40 % Schwefelsäure und 98-60 % Methansulfonsäure zugesetzt werden und aus dieser Polymer-Lösung nach bekanntem Verfahren Membranen zur Ultrafiltration oder Mikrofiltration hergestellt werden.

Die erfindungsgemäß hergestellten Membranen zeichnen sich aus durch erhöhte mechanische Stabilität, sehr hohen Fluß in wäßrigen Medien und ein hohes Rückhaltevermögen für Substanzen mit einem Molekulargewicht von 35 000 - 2 000 000.

EP 0 737 506 A1

**Beschreibung**

Die Erfindung betrifft Polymermembranen auf der Basis von Polyetheretherketon (PEEK), ein Verfahren zu deren Herstellung und ihre Verwendung zur Stofftrennung.

Stofftrennungen werden überwiegend in wäßrigen Systemen durchgeführt, z.B. nach dem Verfahren Ultra- oder Mikrofiltration bzw. Reverse-Osmose. Diese Verfahren sind z.B. in S. Ripperger, "Mikrofiltration mit Membranen", VCH Verlagsgesellschaft mbH, 69469 Weinheim, 1992 und E.Staude, "Membranen und Membrantrennprozesse", VCH Verlag mbH, 69469 Weinheim, 1992 beschrieben.

Für die Verfahren zur Stofftrennung werden Membranen unterschiedlicher Struktur benötigt. Ihre Herstellung ist z.B. für den Fall asymmetrischer Ultrafiltrationsmembranen und symmetrischer Mikrofiltrationsmembranen gut bekannt und erfolgt nach einem Phaseninversionsprozeß, wie er von Loeb und S. Sourirajan in Adv. Chem. Ser. 38.117, 1963 beschrieben wurde. Bei diesem Prozeß wird ein ausgewähltes Polymer in einem Lösungsmittel gelöst und durch Zusatz eines geeigneten Nichtlösers unter kontrollierten Bedingungen ausgefällt. Polymere, die hierfür verwendet werden, sind z.B. Celluloseacetat, Polyimide, Polyvinyliden-fluoride, Polysulfone, sulfonierte Polyetheretherketone und Polyamide. Die Lösungsmittel, die verwendet werden, sind Aceton, Dimethylsulfoxid, Dimethylformamid, Dimethylacetamid, N-Methylpyrrolidon und konzentrierte Schwefelsäure.

Für derartige Membranen ist bekannt, daß die Größe und Dichte der Poren in der Membran von der Konzentration des Polymers in der Lösung und von der Anwesenheit von Porenbildnern oder Additiven, z.B. Salzen, Zuckern und niedermolekularen Polyethylenglykolen abhängig ist, wie z.B. von Strathmann in "Material Science of Synthetic Membranes" Lloyd, ACS 269, 1984 beschrieben wurde.

Membranen, die aus den oben beschriebenen Polymeren hergestellt werden, haben einen oder mehrere Nachteile, z.B. können sie nur in einem begrenzten Temperaturbereich z.B. zwischen 0 und 90°C eingesetzt werden, sie können nicht durch Trockenhitze sterilisiert werden, sie haben eine begrenzte chemische Beständigkeit z.B. in Säuren, Basen oder oxidierenden Agenten, sie lösen sich oder quellen in organischen Lösungsmitteln, z.B. bei Raumtemperatur oder erhöhter Temperatur.

Es wurde deshalb als Werkstoff für Membranen das Polymer Polyetheretherketon (PEEK) vorgeschlagen (DOS 3936997), welcher die oben beschriebenen Nachteile beseitigen soll, z.B. die hohe Löslichkeit der Membranen in aprotischen Lösungsmitteln. Diese bekannten Membranen aus Polyetheretherketon haben jedoch eine Reihe wichtiger Nachteile, z.B. ist ihre Herstellung stark eingeschränkt, weil für dieses Polymer aufgrund seiner chemischen Konstitution nur starke Säuren als Lösungsmittel in Betracht kommen, wobei Schwefelsäure als starke Säure nur begrenzt eingesetzt werden kann, da ab Konzentrationen von 40 Gew.-% $H_2SO_4$ am Polymer eine Sulfonierung erfolgt, wie z.B. in Polymer, 1987, Vol. 28, S. 1009 beschrieben. Mit dieser Umsetzung gehen jedoch die vorteilhaften Eigenschaften des Polymers bzw. der Membran, nämlich ihre Lösungsmittelstabilität verloren.

Herkömmliche Membranen aus PEEK zeigen eine rauhe Oberflächenstruktur, mit einer wesentlich erhöhten Tendenz zur Belagbildung und eine geringe mechanische Festigkeit. (Siehe EP 0382352).

Deshalb wurde versucht, neue geeignete Lösungsmittel für das Polymer zu finden. So beschreibt z.B. die Patentschrift EP 0322975 Hexafluorisopropanol als Lösungsmittel, eine neue außerordentlich kostenintensive und giftige Chemikalie, die beim Einatmen Verätzungen hervorruft. In der Patentschrift US 4957817 wird ein sehr energieintensives Verfahren mit aprotischen Lösungsmitteln beschrieben, wo erst am Siedepunkt des Lösungsmittels geringe Mengen des Polymers gelöst werden. Dafür sind Temperaturen von 300°C erforderlich. Desweiteren werden Mischungen von starken Säuren beschrieben, wie in der DE 3936997 Trifluoressigsäure oder Mischungen von Dichloressigsäure und Schwefelsäure bzw. in EP 0382352 Trifluormethansulfonsäure bzw. in EP 0382256 Methansulfonsäure.

Die reinen Wasserflüsse der beschriebenen Membranen liegen zwar mit 1500 l/m$^2$ h bar sehr hoch, jedoch reduziert sich dieser Wert bereits bei einem Zusatz von nur 0,1 Gew.-% Rinderserum (MG = 67000) drastisch auf nur noch 65 l/m$^2$ h bar. Mit 2 % Zusatz an Rinderserum mißt man so gut wie kein Wasserfluß mehr.

Auch der Zusatz von Porenbildnern, wie Benzophenon führt nicht zur Erhöhung der Wasserflüsse. Selbst mit einem Zusatz von 5 Gew.-% Benzophenon wird bei 6 bar lediglich ein Wasserfluß von 3,7 l/m$^2$ h bar erreicht. Darüber hinaus gehört Benzophenon zu den krebserregenden Substanzen und ist deshalb im praktischen Gebrauch nicht einsetzbar.

Ein weiterer Nachteil der in EP 0382356 beschriebenen Membranen ist, daß sie nicht druckstabil sind. So steigen die spezifischen Wasserflüsse nicht linear mit dem Druck an, sondern nehmen mit steigendem Druck ab. So von 26,0 l/m$^2$ h bar auf 23,8 l/m$^2$ h bar, wenn der Wasserfluß einmal bei 2 bar und dann bei 6 bar gemessen wird.

In keiner der hier aufgeführten Patentschriften werden allerdings Polymerlösungen beschrieben, die mehr als 12 Gew.-% Polymer in der sauren Lösung aufgelöst enthielten.

Aufgabe der Erfindung war es deshalb, die o.g. Nachteile der PEEK-Membranen zu überwinden, d.h., neue PEEK-Membranen mit hohen Wasserflüssen, hoher Druckstabilität und hohem Rückhaltevermögen für Substanzen unterschiedlicher Molgewichte herzustellen. Die Aufgabe konnte in überraschender Weise gelöst werden, indem man in einer Mischung aus 2-40 % Schwefelsäure und 98-60 % Methansulfonsäure 5-20 Gew.-% PEEK und 0,01-15 Gew.-%

Polyethylenterephthalat (PET) auflöst und daraus nach bekannten Verfahren Membranen herstellt. Die resultierende Lösung weist also einen Gesamtgehalt an Polymeren von 5-20 Gew.-% auf.

Überraschenderweise hat sich gezeigt, daß bereits durch geringe Zusätze an PET drastische Änderungen der morphologischen submikroskopischen Struktur des PEEK (fibrillär) in Richtung auf globuläre Einheiten zu verzeichnen sind. Es wird vermutet, daß diese Strukturen dann für den erhöhten Wasserfluß der Membranen verantwortlich sind.

Polymermembranen, welche nach dem erfindungsgemäßen Verfahren hergestellt wurden, verfügen besonders über eine hohe Druckstabilität:

mit ansteigenden Drücken erhöht sich der Wasserfluß linear, wie überzeugend in Abbildung 1 gezeigt wird. Die erfindungsgemäßen Membranen besitzen weiterhin absolute Stabilität in aprotischen Lösungsmitteln und ein hohes Rückhaltevermögen von 100-30 % für Substanzen mit MG = 2.000.000 bis MG = 35.000 wie in Tabelle 1 gezeigt bei transmembranen Flüssen von 590 bis zu 1750 l/m$^2$ h bar.

**Abbildung 1:** Druckfestigkeit von PEEK-Membranen mit Zusätzen von PET
entsprechend Beispiel 3-6 (siehe Tabelle 2)

Membranen nach dem erfindungsgemäßen Verfahren hergestellt, besitzen im Gegensatz zu den bekannten Membranen eine glänzende, glatte Oberfläche und eine gute Benetzbarkeit mit Wasser, siehe Tabelle 2. Während ohne Zusatz von PET der Wassertropfen auf der Membranoberfläche verbleibt (Tabelle 2, Zeile 6), kann der Wassertropfen an Membranen, die durch PET modifiziert sind, in die Membran eindringen. Dieser Benetzungsvorgang verläuft umso schneller, je höher die PET-

Tabelle 1

| Membranbeispiel: | 3 | 4 | 5 | 6 | 7 | 8 |
|---|---|---|---|---|---|---|
| Polymer PET [Gew.-%] | 0,5 | 2,5 | 5,0 | | 0,1 | |
| Polymer PEEK [Gew.-%] | 10,0 | 10,0 | 10,0 | 10,0 | 10,0 | 10,0 |
| Lösungsmittel $H_2SO_4$ [Gew.-%] | 2,0 | 4,0 | 10,0 | 0,0 | 39,9 | 40,0 |
| Lösungsmittel Methan sulfonsäure [Gew.-%] | 87,5 | 87,5 | 75,0 | 90,0 | 50,0 | 50,0 |
| $H_2O$-Fluß.3 bar [l/m$^2$h] | 590 | 1430 | 1750 | 490 | 1000 | 700 |
| Rückhaltevermögen Polyethylenglykol MG35.000 [%] | 35 | 45 | 55 | 21 | 30 | 21 |
| Rückhaltevermögen MG 500.000 [%] | 98 | 98 | 90 | 70 | 98 | 79 |
| Rückhaltevermögen Dextranblau MG 2.000.000 [%] | 100 | 100 | 100 | 85 | 100 | 91 |

Konzentration in der Polymerlösung ist. So werden bei einem Zusatz von 0,5 Gew.-% PET nur 80 s benötigt, damit der Wassertropfen in der Membran versinkt, bei einem Zusatz von 5 Gew.-% PET sogar nur noch 40 s. Das heißt, die nach dem erfindungsgemäßen Verfahren hergestellten Membranen zeigen im Unterschied zu herkömmlichen Membranen aus PEEK ausgesprochen hydrophile Eigenschaften.

Ein weiterer Vorteil der erfindungsgemäßen Membranen ist ihre mechanische Stabilität. Dies kann man in einem einfachen Handzugversuch feststellen. Dazu wird ein 30 mm breiter und 200 mm langer Membranstreifen in eine Klemme eingespannt und senkrecht aufgehängt. Am unteren Ende wird die Membran ebenfalls mit einer Klemme versehen, über die der Probenstreifen mit einer Kraft belastet wird. Zur Ermittlung der aufgebrachten Kraft benutzt man vorteilhaft eine Federwaage. Die Dehnung wird von einem hinter der Anordnung angebrachten Längenmeßstreifen abgelesen (siehe Tabelle 2).

Tabelle 2

| Membranbeispiel: | 3 | 4 | 5 | 6 |
|---|---|---|---|---|
| Polymer PET [Gew.-%] | 0,5 | 2,5 | 5,0 | 0,0 |
| Polymer PEEK [Gew.-%] | 10,0 | 10,0 | 10,0 | 10,0 |
| Lösungsmittel $H_2SO_4$ [Gew.-%] | 2,0 | 4,0 | 10,0 | 0,0 |
| Lösungsmittel Methan sulfonsäure [Gew.-%] | 87,5 | 87,5 | 75,0 | 90,0 |
| Benetzung [s]* | 80 | 60 | 40 | 8 |
| Dehnung (Bruch) [%] | 4 | 3 | 2 | 5 |
| Zugkraft (Bruch) [kg] | 3 | 5 | 6 | 1 |

* Benetzung: Eindringzeit eines Wassertropfens in die Membran

Während Streifen von herkömmlichen PEEK-Membranen nur mit 1 kg belastet werden können und sich dabei um 5 % dehnen, reicht bereits ein Zusatz von 0,5-5 Gew.-% PET zur Polymerlösung aus, damit sich die Festigkeit der Membranen auf das 3- bis 6-fache erhöht, allerdings erwartungsgemäß unter Verlust an Dehnung (siehe Tabelle 2).

Bevorzugte Ausführungsformen des erfindungsgemäßen Verfahrens verwenden homogene Lösungen L, die zu 10-15 Gew.-% aus PEEK und 0,01-5 % aus PET in einer Mischung aus 5-20 % Schwefelsäure und 95-80 % Methansulfonsäure bestehen.

Zur Herstellung der Membran wird die Lösung L nach bekannten Verfahren weiterverarbeitet. Sie wird z.B. auf ein Vlies aus Polyethylenterephthalat FE 2402 der Firma Freudenberg, das auf einer Glasplatte befestigt ist, aufgebracht, mit einer Rakel zu einem Film gezogen, der dann anschließend in einem Phaseninversionsprozeß zu einer Membran ausgefällt wird. Anstelle von Filmen können mit dem erfindungsgemäßen Verfahren nach bekannten Techniken auch andere Formkörper, wie z.B. Hohlfäden, Folien oder Schäume hergestellt werden, neben Flachmembranen auch Schlauch- oder Kapillarmembranen.

Die Fällung der Membranen kann bei Temperaturen zwischen -20°C und +50°C erfolgen. Als Fällungsmittel können Wasser oder Wasser/Lösungsmittel-Gemische verwendet werden; die Lösungsmittel sind hierfür Mischungen von Wasser mit starken Säuren, aber auch dipolare aprotische, wie z.B. Methylpyrrolidon und/oder Dimethylsulfoxid. Aber auch Äthylenglykole, wie Diethylenglykol oder Triethylenglykol oder durch Liegenlassen an der Luft. Bevorzugte Ausführungsformen des erfindungsgemäßen Verfahrens verwenden Wasser in Mischung mit Methansulfonsäure, welche 0,1-50 Gew.-% oder Wasser in Mischung mit Triethylenglykol, welche 0,1-50 Gew.-% Triethylenglykol enthalten.

Anhand der folgenden Beispiele wird das erfindungsgemäße Verfahren näher erläutert. Die Charakterisierung der Membranen bezüglich Größe und Verteilung der Poren erfolgte nach dem "bubble-point"-Test nach ASTM F 316, die Bestimmung des transmembranen Wasserflusses wurde mit der Berghofzelle durchgeführt, DE 3321860. Es wurden Membranen von 47 mm Durchmesser eingesetzt. Die Messungen wurden an drei Proben dreimal wiederholt. Bei der Bestimmung des "bubble-points" erfolgte der Gasdurchtritt oberhalb eines Druckes von 6 bar.

Das Rückhaltevermögen gegenüber gelösten Makromolekülen wurde bei Drücken von 3,0 bar bei 20°C in der gerührten Berghofzelle durchgeführt (700 U/min, 350 ml, Membranfläche 43 cm$^2$). Das Rückhaltevermögen ist definitionsgemäß

$$R = \frac{c1 - c2}{c1} \ 100\%$$

c1 ist die Konzentration der wäßrigen Testlösung
c2 ist die Konzentration im Permeat

Als Testlösung wurde eingesetzt:

I Dextranblau MG = 2.000.000
II Dextran MG = 500.000
III Polyethylenglykol MG = 35.000

Das Rückhaltevermögen wurde für I photometrisch bestimmt. Hierfür wurde eine Lösung von 1 g/l (0,1 %) in Puffer nach Weise pH 7,2 (Fertigpräparat) bei einer Wellenlänge von 620 nm gemessen.
Bei den Testlösungen II und III wurde das Rückhaltevermögen über den TOC-Wert nach ASTM D2579/85 A mit dem Gerät DC 190 Rosemount bestimmt.

**Beispiel 1:**

In einem 500 ml-Dreihalskolben mit Rückflußkühler werden 78 g H$_2$SO$_4$ (98 %ig) und 101,8 g Methansulfonsäure (98 %ig) vorgelegt und bei Raumtemperatur unter Rühren vermischt. Anschließend werden 0,2 g Polyethylenterephthalat (Trevira, Type 140, 1,6 dtex/38 mm, "glänzend", Firma Hoechst) unter Rühren dazugegeben.
Nach ca. 30 min Rührzeit bei Raumtemperatur hat sich das PET vollständig aufgelöst. Nun werden langsam 20 g PEEK 380 P (Korngröße < 1,4 mm) unter schnellem Rühren hinzugefügt.
Nach ca. 4-5 h Rührzeit erhält man eine klare, rotbraun gefärbte Gießlösung, die durch Zentrifugieren von Luftblasen befreit wird. Anschließend werden daraus durch Aufrakeln auf ein PE/PP-Vlies (Firma Freudenberg, 2341) Membranen hergestellt.

Schichtdicke der Membran ohne Vlies: 100-150 μm
Fällbad: H$_2$O bei Raumtemperatur
Fällzeit: ca. 30-60 min

**Beispiel 2 (Gegenbeispiel):**

In einem 500 ml-Dreihalskolben mit Rührer und Rückflußkühler werden 78 g H$_2$SO$_4$ (98 %ig) und 101,8 g Methansulfonsäure (98 %ig) vorgelegt und bei Raumtemperatur unter Rühren vermischt. Anschließend werden 20 g PEEK 380 P (Korngröße < 1,4 mm) unter schnellem Rühren zugefügt.
Nach einer Rührzeit von 4-5 h bei Raumtemperatur erhält man eine klare, rotbraun gefärbte Gießlösung, die durch Zentrifugieren von Luftblasen befreit wird. Anschließend werden daraus durch Aufrakeln auf ein PE/PP-Vlies (Firma Freudenberg, 2341) Membranen hergestellt.

Schichtdicke der Membran ohne Vlies: 100-150 μm
Fällbad: $H_2O$ bei Raumtemperatur
Fällzeit: ca. 30-60 min

**Beispiel 3:**

Es wird verfahren entsprechend Beispiel 1, aber die Rezeptur wird folgendermaßen geändert:

| | |
|---|---|
| PET: | 0,5 % |
| $H_2SO_4$: | 2,0 % |
| PEEK: | 10,0 % |
| Methansulfonsäure: | 87,5 % |
| Membraneigenschaften siehe Tabelle 1 | |

**Beispiel 4:**

Es wird verfahren entsprechend Beispiel 1, aber die Rezeptur wird folgendermaßen geändert:

| | |
|---|---|
| PET: | 2,5 % |
| $H_2SO_4$: | 4,0 % |
| PEEK: | 10,0 % |
| Methansulfonsäure: | 84,0 % |
| Membraneigenschaften siehe Tabelle 1 | |

**Beispiel 5:**

Es wird verfahren entsprechend Beispiel 1, aber die Rezeptur wird folgendermaßen geändert:

| | |
|---|---|
| PET: | 5,0 % |
| $H_2SO_4$: | 10,0 % |
| PEEK: | 10,0 % |
| Methansulfonsäure: | 75,0 % |
| Membraneigenschaften siehe Tabelle 1 | |

**Beispiel 6:**

Es wird verfahren entsprechend Beispiel 1, aber die Rezeptur wird folgendermaßen geändert:

| PEEK: | 10,0 % |
|---|---|
| Methansulfonsäure: | 90,0 % |
| Membraneigenschaften siehe Tabelle 1 | |

**Beispiel 7:**

Es wird verfahren entsprechend Beispiel 1, aber die Rezeptur wird folgendermaßen geändert:

| PET: | 0,1 % |
|---|---|
| $H_2SO_4$: | 39,9 % |
| PEEK: | 10,0 % |
| Methansulfonsäure: | 50,0 % |
| Membraneigenschaften siehe Tabelle 1 | |

**Beispiel 8 (Gegenbeispiel):**

Es wird verfahren entsprechend Beispiel 1, aber die Rezeptur wird folgendermaßen geändert:

| $H_2SO_4$: | 40,0 % |
|---|---|
| PEEK: | 10,0 % |
| Methansulfonsäure: | 50,0 % |
| Membraneigenschaften siehe Tabelle 1 | |

**Patentansprüche**

1. Verfahren zur Herstellung von Polymermembranen auf der Basis von Polyetheretherketon (PEEK) Poly(oxy-1.4-phenylen-oxy-1.4-phenylen-carbonyl-1.4-phenylen) der Formel I

$$-(-O\text{-}p\text{-}C_6H_4\text{-}O\text{-}p\text{-}C_6H_4\text{-}CO\text{-}p\text{-}C_6H_4\text{-})_n \hspace{3cm} I,$$

dadurch gekennzeichnet, daß man eine homogene Lösung L, bestehend zu

a) 5-20 Gew.-% aus PEEK und zu
b) 0,01 bis 15 Gew.-% Polyethylenterephthalat PET

in einer Mischung aus 2-40% Schwefelsäure und 98-60% Methansulfonsäure nach bekannten Techniken in Membranen überführt.

2. Verfahren nach Anspruch 1, dadurch gekennzeichnet, daß man bevorzugt homogene Lösungen L verwendet, welche zu

    a) 5-10 Gew.-% aus PEEK und zu
    b) 0,1 bis 10 Gew.-% aus Polyethylenterephthalat

bestehen.

3. Verfahren nach Anspruch 1 oder 2, dadurch gekennzeichnet, daß man Polyetheretherketon der Formel I mit Mn = 24,900 bis 57.100 verwendet.

4. Verfahren nach Anspruch 1 oder 2, dadurch gekennzeichnet, daß man Polyethylenterephthalat mit Mn = 14,000 bis 25,000 verwendet.

5. Verfahren nach einem oder mehreren der Ansprüche 1-4, dadurch gekennzeichnet, daß man homogene Lösungen L verwendet, deren Feststoffgehalt 20 Gew.-% nicht übersteigt.

6. Verfahren nach Anspruch 1+5 dadurch gekennzeichnet, daß man homogene Lösungen L mit einem Feststoffgehalt bevorzugt von 10-15 Gew.-% verwendet.

7. Verfahren nach einem oder mehreren der Ansprüche 1 bis 6, dadurch gekennzeichnet, daß man als Lösungsmittel starke Säuren für die homogenen Lösungen L verwendet.

8. Verfahren nach Anspruch 7, dadurch gekennzeichnet, daß man als Lösungsmittel Mischungen von Methansulfonsäure und Schwefelsäure oder Trifluormethansulfonsäure verwendet.

9. Verfahren nach einem oder mehreren Ansprüchen 1-8, dadurch gekennzeichnet, daß man bevorzugt Methansulfonsäure mit höchstens 40 Gew.- % Schwefelsäure verwendet.

10. Verfahren nach einem oder mehreren der Ansprüche 1-9, dadurch gekennzeichnet, daß man die Membran bei Temperaturen zwischen 0 °C und +60 °C ausfällt.

11. Verfahren nach einem oder mehreren Ansprüchen 1-10, dadurch gekennzeichnet, daß man als Fällungsmittel für die Membranen Wasser verwendet.

12. Verfahren nach Anspruch 7, 9 und 11, dadurch gekennzeichnet, daß man Mischungen von Wasser und Lösungsmittel verwendet.

13. Verfahren nach Anspruch 11, dadurch gekennzeichnet, daß man bevorzugt ein Wasser / organisches Lösungsmittel-Gemisch mit 5 bis 50 Gew.-% organische Lösungsmittel verwendet.

14. Polymermembranen, gekennzeichnet durch ihre Herstellung nach einem Verfahren oder mehreren der Ansprüche 1-13.

15. Polymermembranen nach Anspruch 14, dadurch gekennzeichnet, daß es sich um eine Flachmembran handelt.

16. Polymermembranen nach Anspruch 14, dadurch gekennzeichnet, daß es sich um eine Schlauchmembran handelt.

17. Polymermembranen nach Anspruch 14, dadurch gekennzeichnet, daß es sich um eine Kapillarmembran handelt.

18. Polymermembranen nach Anspruch 14, dadurch gekennzeichnet, daß es sich um eine Hohlfasermembran handelt.

19. Verwendung der Polymermembranen nach einem oder mehreren der Ansprüche 14-18 zur Ultrafiltration.

20. Verwendung der Polymermembranen nach einem oder mehreren der Ansprüche 14-18 zur Mikrofiltration.

Europäisches
Patentamt

**EUROPÄISCHER RECHERCHENBERICHT**

Nummer der Anmeldung

EP 96 10 1863

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 368 003 (THE DOW CHEMICAL COMPANY) * Seite 3, Zeile 1-9; Ansprüche 1,3,6; Beispiele * --- | 1-3,7-20 | B01D71/52 B01D67/00 C08J9/26 |
| A | EP-A-0 499 381 (IMPERIAL CHEMICAL INDUSTRIES) * Spalte 4, Zeile 32-56 * --- | 1,7-20 | |
| A | EP-A-0 492 446 (THE DOW CHEMICAL COMPANY) * Ansprüche; Tabelle 1 * --- | 1 | |
| A | EP-A-0 407 684 (THE DOW CHEMICAL COMPANY) * Ansprüche * --- | 1 | |
| A,D | EP-A-0 382 356 (IMPERIAL CHEMICAL INDUSTRIES) * Seite 3, Zeile 30-37 * --- | 1,7,8 | |
| A | EP-A-0 427 079 (HOECHST AG) * Seite 4, Zeile 20-26; Ansprüche * | 1,7,8 | |
| D | & DE-A-39 36 997 ----- | | RECHERCHIERTE SACHGEBIETE (Int.Cl.6) B01D C08J |

Der vorliegende Recherchenbericht wurde für alle Patentansprüche erstellt

| Recherchenort | Abschlußdatum der Recherche | Prüfer |
|---|---|---|
| BERLIN | 14.August 1996 | Cordero Alvarez, M |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
Dokument

EPO FORM 1503 03.82 (P04C03)